(19) Europäisches Patentamt
European Patent Office
Office européen des brevets

(11) **EP 2 475 564 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(21) Anmeldenummer: **10752346.6**

(22) Anmeldetag: **09.09.2010**

(51) Int Cl.:
**B61K 9/04** *(2006.01)*

(86) Internationale Anmeldenummer:
**PCT/EP2010/063205**

(87) Internationale Veröffentlichungsnummer:
**WO 2011/029858 (17.03.2011 Gazette 2011/11)**

(54) **VERFAHREN ZUR VORHERSAGE DER TEMPERATUR EINES RADLAGERS EINES RADES EINES FAHRZEUGS**

METHOD FOR PREDICTING THE TEMPERATURE OF A WHEEL BEARING OF A WHEEL OF A VEHICLE

PROCÉDÉ PERMETTANT DE PRÉDIRE LA TEMPÉRATURE D'UN ROULEMENT D'UNE ROUE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **09.09.2009 DE 102009040801**

(43) Veröffentlichungstag der Anmeldung:
**18.07.2012 Patentblatt 2012/29**

(73) Patentinhaber: **KNORR-BREMSE Systeme für Schienenfahrzeuge GmbH 80809 München (DE)**

(72) Erfinder:
• **FRIESEN, Ulf**
**85579 Neubiberg (DE)**
• **FURTWÄNGLER, Ralf**
**80689 München (DE)**

(74) Vertreter: **Mattusch, Gundula**
**C/o Knorr-Bremse AG**
**Moosacherstrasse 80**
**80809 München (DE)**

(56) Entgegenhaltungen:
EP-A2- 0 276 201    EP-A2- 1 197 416
WO-A1-97/11871    US-A- 4 316 175
US-A1- 2003 187 605

## Beschreibung

Die Erfindung betrifft ein Verfahren zur Vorhersage der Temperatur eines Radlagers eines Rades eines Fahrzeugs gemäß Anspruch 1, eine Vorrichtung zur Ausführung des Verfahrens nach Anspruch 8 sowie eine Verwendung der gemäß dem Verfahren vorhergesagten Temperatur nach Anspruch 11.

Im Schienenfahrzeugverkehr werden heutzutage vermehrt Diagnose- und Überwachungssysteme eingesetzt, mit denen Zustandsänderungen von Bauteilen und Baugruppen des Schienenfahrzeugs erfasst werden, um Defekte dieser Bauteile und Baugruppen zu erkennen. Insbesondere bei einem Radsatz eines Schienenfahrzeuges ist eine Detektion von Schäden im Hinblick auf ein Heißlaufen von hohem Interesse.

Moderne Hochgeschwindigkeitszüge fahren grenzüberschreitend und müssen daher entsprechende Kriterien zur Sicherstellung der Interoperabilität einhalten, beispielsweise die Richtlinie 96/48/EG. Dort wird unter anderem eine Onboard-Überwachung der Radsatzlager der Radsätze des Schienenfahrzeugs gefordert. Um kritische Betriebszustände wie beispielsweise das Heißlaufen eines Radsatzlagers zu offenbaren ist insbesondere eine Temperaturüberwachung der Radsatzlager notwendig.

Aus der EP 1 365 163 A1 ist eine Vorrichtung zum Überwachen der Temperatur eines Radsatzlagers eines Radsatzes eines Schienenfahrzeugs bekannt, bei welchem ein Sensorelement direkt an einem Dichtungselement des Radsatzlagers angeordnet ist, d.h. möglichst nahe an der Lastzone des Radsatzlagers. Das Anbringen eines Temperatursensors direkt an der Lastzone eines Radsatzlagers, an welcher erfahrungsgemäß die höchsten Temperaturen auftreten, d.h. in Umfangsrichtung des äußeren Lagerrings gesehen oben, verursacht jedoch einen gewissen Aufwand im Hinblick auf mechanische Anbindung des Temperatursensors und dessen Verkabelung und ist aus Platzgründen konstruktiv oft schwierig zu realisieren, insbesondere, wenn innerhalb einer Lagereinheit, beispielsweise bei Doppellagern mehrere Lastzonen zu berücksichtigen sind. In der Regel ist es daher schwierig, die Temperatur in der Lastzone des Radlagers zu messen. Wenn jedoch der Temperaturverlauf an von der Lastzone abweichenden oder entfernten Messstellen wie beispielsweise an einem Lagerdeckel des Radlagers gemessen werden, so weisen diese Signale aufgrund des Wärmeübergangs von der Lastzone zur Messstelle zeitliche Verzögerungen auf, die auch eine Diagnose bzw. Interpretation der gemessenen Temperatur verzögern.

Wenn beispielsweise ein Schienenfahrzeug eine Geschwindigkeit von 300 km/h aufweist und die kritische Temperatur eines Radlagers bei 110°C liegt und diese Temperatur mit einem hohen Temperaturgradienten erreicht wird, so wird bei einer Temperaturüberwachung des Stands der Technik eine automatische Bremsung beim Erreichen der kritischen Temperatur eingeleitet. Jedoch wird die Temperatur des betreffenden Radlagers für eine bestimmte Zeit lang noch deutlich ansteigen, d.h. die Lagertemperatur kann die kritische Temperatur überschreiten, wodurch Lagerschäden drohen.

Wünschenswert wäre daher ein Verfahren, mit welchem die Lagertemperatur eines Radlagers vorhersagen zu können, um bereits vor dem Erreichen der kritischen Temperatur geeignete Maßnahmen ergreifen zu können.

Aufgabe

Die Aufgabe der Erfindung besteht daher darin, ein Verfahren zur Verfügung zu stellen, welches mit geringem signalverarbeitungstechnischem Aufwand eine möglichst zuverlässige zur Vorhersage der Temperatur eines Radlagers eines Rades eines Fahrzeugs erlaubt.

Diese Aufgabe wird durch die Merkmale von Anspruch 1 gelöst.

Offenbarung der Erfindung

Die gemäß dem erfindungsgemäßen Verfahren durchgeführte Vorhersage der Temperatur eines Radlagers eines Rades eines Fahrzeugs für einen in Bezug zu einem gegenwärtigen Zeitpunkt in der Zukunft liegenden Zeitpunkt oder für ein in Bezug zu einem gegenwärtigen Zeitpunkt in der Zukunft liegendes Zeitintervall erfolgt auf der Basis eines in Bezug zum gegenwärtigen Zeitpunkt in einem vergangenen Zeitintervall liegenden Verlaufs der Temperatur des Radlagers.

Hierbei wird die vorhergesagte Temperatur des Radlagers aus der Summe der zum gegenwärtigen Zeitpunkt herrschenden Temperatur des Radlagers und eines Korrekturwerts ermittelt wird, welcher abhängig von einer Änderung der Fahrgeschwindigkeit und von einer Änderung der Temperatur des Radlagers innerhalb des vergangenen Zeitintervalls bestimmt wird.

Mit anderen Worten basiert das Verfahren auf dem vergangenen Verlauf einer mittelbar oder unmittelbar gemessenen bzw. abgeschätzten Radlagertemperatur. Ein durch das Verfahren anhand der Historie berechneter Korrekturwert wird dann abhängig von der Fahrgeschwindigkeit gewichtet und zu der aktuell gemessenen Temperatur addiert. Das Ergebnis stellt eine Voraussage für die Radlagertemperatur dar, welche sich nach einer bestimmten Zeitspanne einstellt. Hierbei wird eine Änderung des Wärmeeintrags in das Radlager durch eine Änderung der Fahrzeuggeschwindigkeit implizit berücksichtigt.

Im einzelnen wird ein Verfahren zur Vorhersage der Temperatur ($T_{in,p}$) eines Radlagers eines Rades eines Fahrzeugs für einen in Bezug zu einem gegenwärtigen Zeitpunkt (t) in der Zukunft liegenden Zeitpunkt ($t+\Delta t_p$) oder für ein in Bezug zu einem gegenwärtigen Zeitpunkt (t) in der Zukunft liegendes Zeitintervall (t, $t+\Delta t_p$) auf der Basis eines in Bezug zum gegenwärtigen Zeitpunkt (t) in einem vergangenen Zeitintervall ($t-\Delta t_b$, t)

liegenden Verlaufs der Temperatur ($T_{in}$) des Radlagers, wobei die vorhergesagte Temperatur ($T_{in,p}$) des Radlagers aus der Summe der zum gegenwärtigen Zeitpunkt (t) herrschenden Temperatur ($T_{in}$) des Radlagers und eines Korrekturwerts ($\Delta t_p$) ermittelt wird, welcher abhängig von einer Änderung der Fahrgeschwindigkeit ($\Delta v_{train}$) und von einer Änderung der Temperatur ($\Delta t_b$) des Radlagers innerhalb des vergangenen Zeitintervalls (t-$\Delta t_b$, t) bestimmt wird:

$$T_{in,p} = T_{in} + \Delta T_p$$

wobei der Korrekturwert ($\Delta t_p$) aus dem Produkt eines die Änderung der Fahrgeschwindigkeit ($\Delta v_{train}$) innerhalb des vergangenen Zeitintervalls (t-$\Delta t_b$, t) repräsentierenden Faktors (c) und der Änderung der Temperatur ($\Delta t_b$) des Radlagers (1) innerhalb des vergangenen Zeitintervalls (t-$\Delta t_b$, t) berechnet wird:

$$\Delta T_p = c \cdot \Delta T_b$$

und wobei der Faktor (c) gleich dem Verhältnis der Fahrgeschwindigkeit [$v_{train}(t)$] zum gegenwärtigen Zeitpunkt (t) und der Fahrgeschwindigkeit [$v_{train}(t-\Delta t_b)$] an der unteren Intervallgrenze (t-$\Delta t_b$) des vergangenen Zeitintervalls [t-$\Delta t_b$, t] ist:

$$c = v_{train}(t)/v_{train}(t-\Delta t_b)$$

und dieser Faktor (c)

a) gleich 1 ist, falls die Änderung der Fahrgeschwindigkeit ($\Delta v_{train}$) innerhalb des vergangenen Zeitintervalls (t-$\Delta t_b$, t) gleich Null ist,
b) kleiner als 1 ist, falls die Änderung der Fahrgeschwindigkeit ($\Delta v_{train}$) innerhalb des vergangenen Zeitintervalls (t-$\Delta t_b$, t) positiv ist,
c) größer 1 ist falls die Änderung der Fahrgeschwindigkeit ($\Delta v_{train}$) innerhalb des vergangenen Zeitintervalls (t-$\Delta t_b$, t) negativ ist.

Beim Fall a) wird dann ein Anstieg der Lagertemperatur durch Extrapolation auf der Basis des zeitlich vergangenen Verlaufs der Lagertemperaturen vorausgesagt, wenn die die Fahrzeuggeschwindigkeit während des vergangenen Zeitintervalls unverändert blieb.

Wenn hingegen die Fahrzeuggeschwindigkeit während des vergangenen Zeitintervalls gemäß Fall b) reduziert wurde, so wird dieser Einfluss über einen Faktor kleiner als 1 berücksichtigt, um einen demgegenüber kleineren Wert für die vorhergesagte Lagertemperatur zu erhalten. Damit soll verhindert werden, dass ein in der Vergangenheit stattgefundener Lagertemperaturanstieg auch nach einem Bremsvorgang extrapoliert wird, weil der Wärmeeintrag in das Radlager durch die Bremsung reduziert wird.

Wurde jedoch gemäß Fall c) die Fahrzeuggeschwindigkeit innerhalb des vergangenen Zeitintervalls erhöht, ist damit zu rechnen, dass sich der Wärmeeintrag in das Radlager weiter erhöht, so dass ein Faktor größer als 1 angesetzt wird, um diesem Einfluss Rechnung zu tragen.

Durch das Verfahren können die beim Stand der Technik vorliegenden Verzögerungen kompensiert werden, die auftreten, bis ein Diagnoseergebnis vorliegt, um einen sicheren Zustand einzunehmen und um Schäden zu verhindern. Wegen der Vorhersage der Lagertemperatur kann mit dem vorgeschlagenen Verfahren ein Alarmsignal bereits so frühzeitig ausgelöst werden, dass die gemessene Lagertemperatur die kritische Temperatur noch gar nicht erreicht hat, jedoch ein Erreichen anhand der Vorhersage zu erwarten ist. Der weitere Anstieg der Lagertemperatur nach Einleitung von Gegenmaßnahmen wie beispielsweise einer automatischen Bremsung ist dann unkritisch, weil zuvor die kritische Lagertemperatur noch gar nicht erreicht wurde.

Das erfindungsgemäße Verfahren eignet sich deshalb besonders für Fahrzeuge, bei welchen eine Überwachung der Radlager aus Sicherheitsgründen besonders wünschenswert ist, also für Schienenfahrzeuge und unter solchen insbesondere für Hochgeschwindigkeitszüge. Jedoch ist das Verfahren für jede Art von Fahrzeug anwendbar.

Durch die in den Unteransprüchen aufgeführten Maßnahmen sind vorteilhafte Weiterbildungen und Verbesserungen der in Anspruch 1 angegebenen Erfindung möglich.

Besonders bevorzugt ist vorgesehen, dass

a) falls die zum gegenwärtigen Zeitpunkt herrschende Temperatur oder die vorhergesagte Temperatur des Radlagers eine vorgegebene Temperaturschwelle für wenigstens ein vorgegebenes Zeitintervall überschreitet, ein Warnsignal erzeugt wird,
b) falls die vorhergesagte Temperatur des Radlagers eine vorgegebene Temperaturschwelle für wenigstens ein vorgegebenes Zeitintervall überschreitet, ein Alarmsignal erzeugt wird.

Das Warn- bzw. Alarmsignal wird dann abhängig vom Erreichen von Schwellwerten durch die aktuell vorliegende (und gemessene bzw. geschätzte) Temperatur bzw. durch die vorausgesagte Temperatur des Radlagers erzeugt. Ein Warnsignal stellt dabei hinsichtlich der Dringlichkeit eines Eingriffs wie beispielsweise einer automatischen Bremsung des Fahrzeugs ein nachrangiges Signal gegenüber dem vorrangigen Alarmsignal dar, welches ein sofortiges Eingreifen bedingt.

Durch das Heranziehen unterschiedlicher Temperaturen, nämlich einerseits der aktuell vorliegenden Lagertemperatur und andererseits der vorhergesagten Lagertemperatur ergibt sich ein an die jeweiligen Fahr- oder Betriebsbedingungen angepasstes Diagnoseverhalten. Denn bei einem festgestellten großen Temperaturgradienten innerhalb des vergangenen Zeitintervalls wird ein Warnsignal hinfällig, da dann sehr schnell ein für das betreffende Radlager kritischer Zustand erreicht werden kann, so dass in diesem Fall ein einen Eingriff hervorrufendes Alarmsignal einem Warnsignal vorzuziehen ist. Bei moderaten Temperaturgradienten innerhalb des vergangenen Zeitintervalls geht einem unter Umständen noch zu erzeugenden Alarmsignal ein Warnsignal voraus, auf welches geeignet reagiert werden kann, beispielsweise durch eine Reduzierung der Fahrzeuggeschwindigkeit.

Hierdurch ergibt sich eine situationsgerechte Meldecharakteristik, denn abhängig von der jeweiligen Situation kann dem Alarmsignal ein Warnsignal vorausgehen, beispielsweise dann, wenn der Temperaturanstieg während des vergangenen Zeitintervalls moderat war. Andernfalls, also bei großen Temperaturgradienten während des vergangenen Zeitintervalls wird ein Alarmsignal erzeugt und ein Warnsignal ist damit hinfällig. Im ersten Fall lässt sich dann ein Alarmsignal durch Eingriffe wie eine Reduktion der Geschwindigkeit auf Grund des Warnsignals noch verhindern, im zweiten Fall in der Regel nicht.

Diese Ausgestaltung des erfindungsgemäßen Verfahrens erlaubt eine frühzeitige Erkennung von kritischen Zuständen des Lagers, in dem der Verlauf der Temperatur und weitere Systemzustände, die Einfluss auf den Wärmeeintrag in das Lager haben, berücksichtigt werden. Durch den prädikativen Charakter werden die Zeitverzögerungen bei der Einnahme eines sicheren Zustands kompensiert, d.h. im Idealfall wird die Temperatur auch nach der Reaktion auf den Alarm die kritische Temperatur nicht überschreiten. Die Alarmschwelle kann somit der kritischen Temperatur näher herangeführt werden als beim Stand der Technik.

Um keine unrealistischen Werte für den Korrekturwert bzw. den Faktor zu erhalten, wird der Faktor beispielsweise innerhalb auf ein vorgegebenes Intervall und der Korrekturwert auf einen Maximalwert begrenzt. Das Intervall für den Faktor bzw. der Maximalwert für den Korrekturfaktor ergibt sich beispielsweise aus Versuchen.

Weiterhin wird die Temperatur des Radlagers zum gegenwärtigen Zeitpunkt bevorzugt auf der Basis der an einem vom Radlager verschiedenen, aber mit dem Radlager in direkter oder indirekter Weise in wärmeleitender Verbindung stehenden Bauteil gemessenen Temperatur bestimmt, wobei als das vom Radsatzlager verschiedene Bauteil ein das Radlager wenigstens teilweise abdeckender Radsatzlagerdeckel oder das Radsatzlagergehäuse des Radsatzlagers herangezogen wird.

Diese Maßnahme trägt dem eingangs erwähnten Umstand Rechnung wonach das Anbringen von Temperatursensoren in der Lastzone eines Radlagers in der Regel schwierig ist. Da das erfindungsgemäße Verfahren die durch das (indirekte) Messen der Radlagertemperatur an anderer Stelle bedingten Nachteile hinsichtlich der zeitlichen Verzögerung der Antwort auf eine Änderung der Betriebsbedingungen durch die zeitliche Vorhersage der Lagertemperatur weitgehend kompensieren kann, stellt die gemessen am Aufwand günstigere indirekte Messung der Radlagertemperatur keinen Nachteil mehr dar.

Die Erfindung betrifft auch eine Verwendung der anhand des Verfahrens nach einem der vorhergesagten Temperatur des Radlagers zum Vergleich mit einem Temperaturgrenzwert, wobei eine den Temperaturgrenzwert überschreitende vorhergesagte Temperatur des Radlagersein Signal für einen zugespannten Zustand wenigstens einer dem Radlager zugeordneten oder benachbarten Reibungsbremse und eine den Temperaturgrenzwert unterschreitende vorhergesagte Temperatur des Radlagers ein Signal für einen gelösten Zustand der dem Radlager zugeordneten oder benachbarten Reibungsbremse liefert.

Mit der anhand des erfindungsgemäßen Verfahrens vorhergesagten Temperatur $T_{in,p}$ des Radsatzlagers 1 können daher auch die Funktionen (zugespannt oder gelöst) von in Bezug zu dem Radsatzlager 1 benachbarten Reibungsbremsen des Schienenfahrzeugs überwacht werden.

Die Erfindung betrifft auch eine Vorrichtung zur Ausführung des oben beschriebenen Verfahrens, wobei ein Temperatursensor zur direkten oder indirekten Messung der Temperatur des Radlagers sowie ein Mikrocomputer vorgesehen sind, in welchem ein Rechenmodell zur Vorhersage der Temperatur des Radlagers implementiert ist.

Besonders bevorzugt ist dabei der Temperatursensor mit einem Geschwindigkeitssensor zu einem Kombinationssensor zusammengefasst. Dann entsteht kein zusätzlicher Aufwand für den Temperatursensor durch die Sensorinstallation und Verkabelung. Solche Kombinationssensoren werden insbesondere bei Gleitschutzgeräten von Schienenfahrzeugen eingesetzt.

Weitere, die Erfindung fortbildende Maßnahmen werden nachstehend gemeinsam mit der Beschreibung eines bevorzugten Ausführungsbeispiels der Erfindung anhand der Figuren näher dargestellt. In der Zeichnung zeigt:

Fig.1 eine schematische Darstellung eines Radsatzlagers eines Schienenfahrzeugs mit einem Temperatursensor;

Fig.2 ein schematisches Ersatzschaltbild eines Rechenmodells im Rahmen eines Verfahrens zum Abschätzen der Radsatzlagertemperatur des Radsatzlagers von Fig.1 bzw. der Umgebungstemperatur des Schienenfahrzeugs;

Fig.3 ein Blockschaltbild zur Darstellung eines Verfahrens zum Abschätzen der Radsatzlagertemperatur des Radsatzlagers von Fig.1;

Fig.4　ein Blockschaltbild zur Darstellung eines Verfahrens zur Vorhersage der Radsatzlagertemperatur des Radsatzlagers von Fig.1;

Fig.5　ein die Abhängigkeit der Radsatzlagertemperatur von der Fahrgeschwindigkeit veranschaulichendes Diagramm;

Fig.6　ein Diagramm zur Darstellung der mit dem Verfahren vorhergesagten Temperatur bei in der Vergangenheit kleinen Temperaturgradienten;

Fig.7　ein Diagramm zur Darstellung der mit dem Verfahren vorhergesagten Temperatur bei in der Vergangenheit großem Temperaturgradienten.

Beschreibung des Ausführungsbeispiels

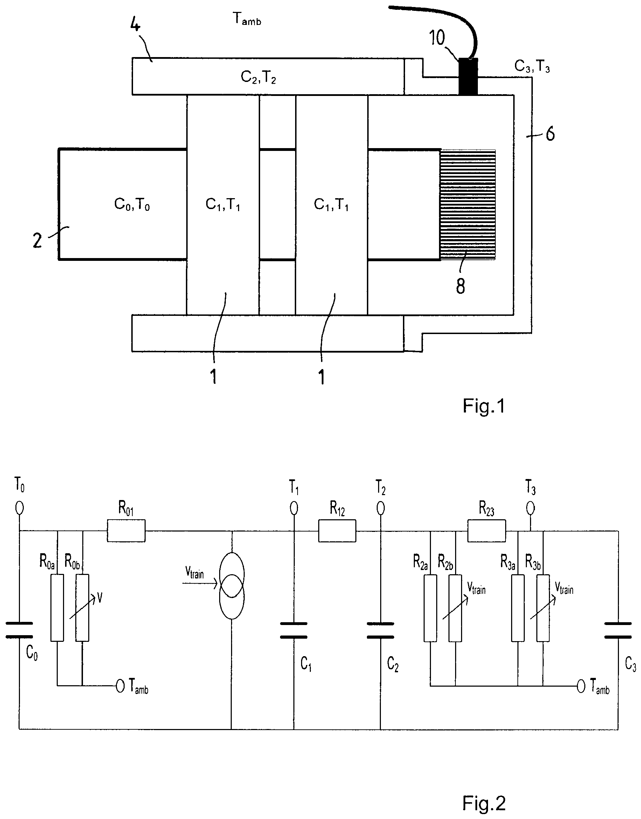

In Fig.1 ist eine schematische Darstellung eines Radsatzlagers 1 eines Schienenfahrzeugs gezeigt, wobei an einer Welle oder Achse 2 des Radsatzes endseitig zwei hier nicht explizit gezeigte Räder angeordnet sind. Dabei ist in Nachbarschaft zu den Rädern jeweils ein Radsatzlager 1 vorhanden, welches die Achse 2 an einem hier ebenfalls nicht gezeigten Drehgestell lagert. Bevorzugt handelt es sich bei dem Radsatzlager 1 um ein Doppellager, d.h. es sind zwei in axialer Richtung hintereinander angeordnete Radsatzlager beispielsweise in Form zweier Wälzlager vorhanden.

Die folgenden Ausführungen betreffen ein Verfahren und eine Vorrichtung zum Abschätzen der Temperatur des Radsatzlagers 1 mittels eines Rechenmodells. Das Rechenmodell zur Abschätzung der Temperatur des Radsatzlagers 1 basiert auf einer Modellierung der Wärmekapazitäten von Bauteilen des Radsatzes bzw. des Radsatzlagers 1, der Wärmeleitung in Bauteilen des Radsatzes bzw. des Radsatzlagers 1, der Wärmeübergangswiderstände zwischen Bauteilen des Radsatzes bzw. Radsatzlagers 1, sowie der erzwungenen, durch die Fahrgeschwindigkeit des Schienenfahrzeugs bedingten erzwungenen Konvektion, der freien Konvektion und des Wärmeübergangs zwischen den Bauteilen des Radsatzes bzw. Radsatzlagers 1 in die Umgebung. Die erzwungene Konvektion ist eine Funktion der Geschwindigkeit des Schienenfahrzeugs.

Ein elektrisches Ersatzschaltbild des Rechenmodells ist in Fig.2 gezeigt und weist die folgenden Elemente auf:

Die Achse 2 hat eine Wärmekapazität $C_0$, wobei eine Wärmeleitung, symbolisiert durch den Widerstand $R_{01}$ von der Achse zum Radsatzlager 1 mit der Wärmekapazität $C_1$ stattfindet bzw. umgekehrt. Denn die Innenringe der vorzugsweise als Wälzlager ausgeführten Radsatzlager 1 stehen mit der Achse 2 in unmittelbar wärme übertragender Verbindung. Vereinfachend weisen beide zu einem Doppellager zusammengefasste Radsatzlager 1 die Wärmekapazität C1 auf. Weiterhin wird die freie und erzwungene Konvektion, d.h. der Wärmeübergang von der Achse 2 zur Umgebung durch die Widerstände $R_{0a}$ und $R_{0b}$ symbolisiert. Die erzwungene Konvektion erfolgt aufgrund der Fahrgeschwindigkeit $v_{train}$ des Schienenfahrzeugs. Es wird angenommen, dass die Achse 2 eine Temperatur $T_0$ aufweist.

Von den Radsatzlagern 1 mit der Wärmekapazität C1 findet eine Wärmeleitung zu einem gemeinsamen Radsatzlagergehäuse 4 der Radsatzlager 1 statt, welches die Wärmekapazität $C_2$ aufweist sowie zur Achse 2 mit der Wärmekapazität $C_0$ über den Widerstand $R_{01}$. Weiterhin findet ein von der Geschwindigkeit $v_{train}$ des Schienenfahrzeugs abhängiger Wärmeeintrag in die Radsatzlager 1 statt. Es wird angenommen, dass die Radsatzlager 1 eine Temperatur $T_1$ aufweisen.

Die Wärmeleitung vom Radsatzlagergehäuse 4 der Radsatzlager 1 mit der Wärmekapazität $C_2$ zu den Radsatzlagern 1 ($C_1$) wird durch den Widerstand $R_{12}$ und zu einem Radsatzlagerdeckel 6 mit der Wärmekapazität $C_3$ durch den Widerstand $R_{23}$ symbolisiert. Die Widerstände $R_{2a}$ und $R_{2b}$ kennzeichnen die freie und erzwungene Konvektion und damit den Wärmeübergang vom Radsatzlagergehäuse 4 in die Umgebung bzw. umgekehrt. Es wird angenommen, dass das Radsatzlagergehäuse 4 die Temperatur $T_2$ aufweist.

Die am Radsatzlagerdeckel 6 wirkende freie und erzwungene Konvektion und damit der Wärmeübergang von diesem in die Umgebung wird durch die Widerstände $R_{3a}$ und $R_{3b}$ symbolisiert.

Das Radsatzlagergehäuse 4 steht dabei mit den äußeren Lagerringen der vorzugsweise als Wälzlager ausgeführten Radsatzlager 1 in unmittelbarer wärme übertragender Verbindung wie auch stirnseitig mit dem Radsatzlagerdeckel 6. Die Wärmeleitung zwischen dem Radsatzlagergehäuse 4 und dem Radsatzlagerdeckel 6 erfolgt über den Widerstand $R_{23}$. Der Wärmeübergang zwischen der Umgebung mit der Umgebungstemperatur $T_{amb}$ und dem Radsatzlagerdeckel 6 durch freie Konvektion und erzwungene Konvektion aufgrund der Fahrgeschwindigkeit $v_{train}$ ist durch die Wärmeübergangswiderstände $R_{3a}$ und $R_{3b}$ gekennzeichnet.

Der Radsatzlagerdeckel 6 umschließt das Ende der Achse 2, welches über die Radsatzlager 1 ein Stück weit axial hinaus ragt und an welchem ein Polrad 8 eines hier ansonsten nicht gezeigten Geschwindigkeitssensors ausgebildet ist. Der Geschwindigkeitssensor meldet ein Geschwindigkeitssignal an ein Gleitschutzgerät des Schienenfahrzeugs, um schlupfgeregelte Bremsungen ausführen zu können.

Anstatt die Temperatur $T_1$ des Radsatzlagers 1 direkt zu messen, wird die Temperatur $T_3$ des Radsatzlagerdeckels 6 mittels eines Temperatursensors 10 gemessen. Weiterhin ist auch ein hier nicht gezeigter Sensor zur direkten oder indirekten Messung der Fahrgeschwindigkeit $v_{train}$ des Schienenfahrzeugs vorgesehen sowie zunächst auch ein hier nicht gezeigter Sensor zur Messung der Umgebungstemperatur $T_{amb}$.

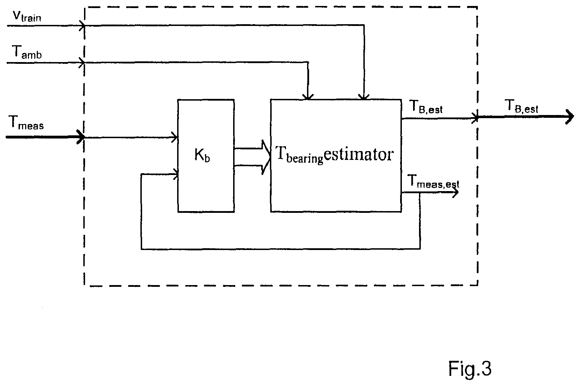

Beim dem in Fig.3 als Blockschaltbild gezeigten bevorzugten Ausführungsbeispiel des Rechenmodells $T_{bearing}$.estimator wird die durch den Temperatursensor 10 gemessene Temperatur $T_3$ des Radsatzlagerdeckels 6 als $T_{meas}$ bezeichnet. Weiterhin wird in Fig.3 die vom Rechenmodell $T_{bearing}$.estimator zu schätzende Temperatur $T_1$ der Radsatzlager 1 mit $T_{B,est}$ bezeichnet. Die Bezeichnung der Umgebungstemperatur $T_{amb}$ wie auch die der Geschwindigkeit $v_{train}$ des Schienenfahrzeugs bleibt hingegen unverändert.

Das Rechenmodell $T_{bearing}$.estimator ist aufgrund seines in Fig.3 dargestellten Aufbaus dann in der Lage, abhängig von der Geschwindigkeit $v_{train}$ und von der Umgebungstemperatur $T_{amb}$ des Schienenfahrzeugs als Eingangsgrößen die Temperatur $T_{B,est}$ der Radsatzlager 1 abzuschätzen.

Zusätzlich wird die Temperatur $T_{meas}$ des Radsatzlagerdeckels 6, welcher mit dem Radsatzlagergehäuse 4 und den Radsatzlagern 1 in wärmeleitender Verbindung steht, im Betrieb als Messtemperatur durch den Temperatursensor 10 gemessen. Parallel dazu wird die Temperatur des Radsatzlagerdeckels 6 auch als Schätztemperatur $T_{meas,est}$ mit Hilfe des Rechenmodells $T_{bearing}$ estimator abgeschätzt.

Zur Verbesserung der Genauigkeit des Rechenmodells $T_{bearing}$ estimator im Hinblick auf die Abschätzung der Temperatur $T_{B,est}$ der Radsatzlager 1 weist das Rechenmodell $T_{bearing}$ estimator ein Korrekturglied $K_b$ auf, mit welchem es anhand eines Vergleichs der Messtemperatur $T_{meas}$ des Radsatzlagerdeckels 6 mit der Schätztemperatur $T_{meas,est}$ des Radsatzlagerdeckels 6 ständig, zeitweise oder zyklisch kalibriert bzw. abgeglichen wird.

Mit anderen Worten erfolgt eine Eigenkalibrierung oder ein Eigenabgleich des Rechenmodells $T_{bearing}$ estimator, welches die Abschätzung der Temperatur $T_{B,est}$ der Radsatzlager 1 zum Ziel hat, durch Messung und Abschätzung der Temperatur an einem von den Radsatzlagern 1 verschiedenen Stelle des Radsatzes, welche aber durch Wärmeleitung bzw. Wärmeübergang mit den Radsatzlagern 1 thermodynamisch in Verbindung steht. Diese Stelle ist bevorzugt der Radsatzlagerdeckel 6, weil an diesem zum einen ein Temperatursensor 10 aus Platzgründen einfacher angebracht werden kann als an den Radsatzlagern 1 selbst. Zum andern ist an dem Radsatzlagerdeckel 6 der mit dem Polrad 8 zusammen wirkende Geschwindigkeitssensor für den Gleitschutz angeordnet, so dass der Temperatursensor 10 mit dem Geschwindigkeitssensor zu einem Kombinationssensor 10 vorteilhaft zusammengefasst werden kann.

Weiterhin wird bei dem Rechenmodell $T_{bearing}$ estimator eine Grundkalibrierung oder Grundparametrierung durchgeführt, von welcher ausgehend das Korrekturglied $K_b$ oder der Korrekturterm $K_b$ zur Verbesserung der Genauigkeit des Rechenmodells $T_{bearing}$ estimator im Betrieb des Schienenfahrzeugs angepasst wird. Die Eingangs- oder Grundkalibrierung des Rechenmodells $T_{bearing}$ estimator wird beispielsweise von den Fahrzeugparametern abgeleitet, mit Hilfe von Simulationen (z.B. finite Elemente) bestimmt oder kann basierend auf Messdaten erfolgen.

Ergebnis der Schätzung ist dann die Temperatur $T_{B,est}$ der Radsatzlager 1 und stellt die Temperatur des Radsatzlagers 1 zum aktuellen oder gegenwärtigen Zeitpunkt t dar. Diese Temperatur kann natürlich auch direkt am Radsatzlager 1 mittels einer geeigneten Sensorik gemessen werden.

Für die folgenden Ausführungen, welche ein Verfahren und eine Vorrichtung zur Vorhersage der Temperatur des Radsatzlagers 1 betreffen, sei diese für einen in Bezug zu einem gegenwärtigen Zeitpunkt (t) in der Zukunft liegenden Zeitpunkt (t+$\Delta t_p$) oder für ein in Bezug zu einem gegenwärtigen Zeitpunkt (t) in der Zukunft liegendes Zeitintervall (t, t+$\Delta t_p$) vorhergesagte Temperatur mit $T_{in,p}$ und die in Bezug zum gegenwärtigen Zeitpunkt (t) gemessene oder wie zuvor beschrieben geschätzte Temperatur $T_{B,est}$ des Radsatzlagers 1 mit $T_{in}$ bezeichnet.

Die Vorhersage der Temperatur des Radlagers 1 erfolgt auf der Basis eines in Bezug zum gegenwärtigen Zeitpunkt (t) in einem vergangenen Zeitintervall [t- $\Delta t_b$, t] liegenden Verlaufs der Temperatur $T_{in}$ des Radlagers (1), wobei die vorhergesagte Temperatur $T_{in,p}$ des Radlagers 1 aus der Summe der zum gegenwärtigen Zeitpunkt (t) herrschenden Temperatur $T_{in}$ (oben: $T_{B,est}$) des Radlagers 1 und eines Korrekturwerts $\Delta T_p$ ermittelt wird, welcher abhängig von einer Änderung wenigstens einer Fahrzustandsbedingung wie der Fahrgeschwindigkeit $\Delta v_{train}$ und von einer Änderung der Temperatur $\Delta T_{in}$ des Radsatzlagers innerhalb des vergangenen Zeitintervalls [t- $\Delta t_b$, t] bestimmt wird:

$$T_{in,p} = T_{in} + \Delta T_p \qquad (1)$$

ist die für den Zeitpunkt (t+ $\Delta t_p$) vorhergesagte Temperatur basierend auf der zum Zeitpunkt (t) geschätzten oder gemessenen Temperatur $T_{in}$.

Zur Bestimmung des Korrekturwerts $\Delta T_p$ wird zunächst der Temperaturanstieg $\Delta T_b$ der Temperatur $T_{in}$ des Radsatzlagers 1 im vergangenen Zeitintervall [t- $\Delta t_b$, t] ermittelt.

In einem Sonderfall ist $\Delta T_b = \Delta t_p$. Dann gilt

$$\Delta T_p = c \cdot \Delta T_b \qquad (2)$$

wobei der Korrekturwert $\Delta T_p$ bevorzugt auf ein Intervall [0, $\Delta T_{max}$ ] limitiert wird.

Besonders bevorzugt wird der Korrekturwert $\Delta T_p$ daher aus dem Produkt eines die Änderung beispielsweise der Fahrgeschwindigkeit $v_{train}$ innerhalb des vergangenen Zeitintervalls [t- $\Delta t_b$, t] repräsentierenden

Faktors c und der Änderung $\Delta T_b$ der Temperatur des Radsatzlagers 1 innerhalb des vergangenen Zeitintervalls [t- $\Delta t_b$, t] berechnet

Der Faktor c ergibt sich aus den Geschwindigkeiten an den Intervallgrenzen von [t- $\Delta t_{b,t}$] mit $v_{train}$ (t- $\Delta t_b$)= $v_{train, b}$ und $v_{train}$ (t) = $v_{train}$. Hat sich die Geschwindigkeit $v_{train}$ verrändert (z.B. $v_{train}$ < $v_{train, b}$), dann gilt

$$c = v_{train}/ v_{train,b} \qquad (3)$$

Der Faktor c wird bevorzugt auf ein Intervall [$c_{min}$, $c_{max}$] begrenzt.

Der Faktor c ist dabei

- gleich 1, falls die Änderung der Fahrzeuggeschwindigkeit $v_{train}$ innerhalb des vergangenen Zeitintervalls [t- $\Delta t_b$, t] gleich Null ist,

- kleiner als 1, falls die Änderung der Fahrzeuggeschwindigkeit $v_{train}$ innerhalb des vergangenen Zeitintervalls [t- $\Delta t_b$, t] positiv ist,

größer als 1, falls die Änderung der Fahrzeuggeschwindigkeit $v_{train}$ innerhalb des vergangenen Zeitintervalls [t- $\Delta t_b$, t] negativ ist.

Beim c = 1 wird dann ein Anstieg der Radsatzlagertemperatur $T_{in,p}$ (t) durch Extrapolation auf der Basis des zeitlich vergangenen Verlaufs der gemessenen oder geschätzten Radsatzlagertemperaturen $T_{in}$ (t) vorausgesagt, wenn die Fahrzeuggeschwindigkeit $v_{train}$ während des vergangenen Zeitintervalls [t- $\Delta t_b$, t] unverändert blieb.

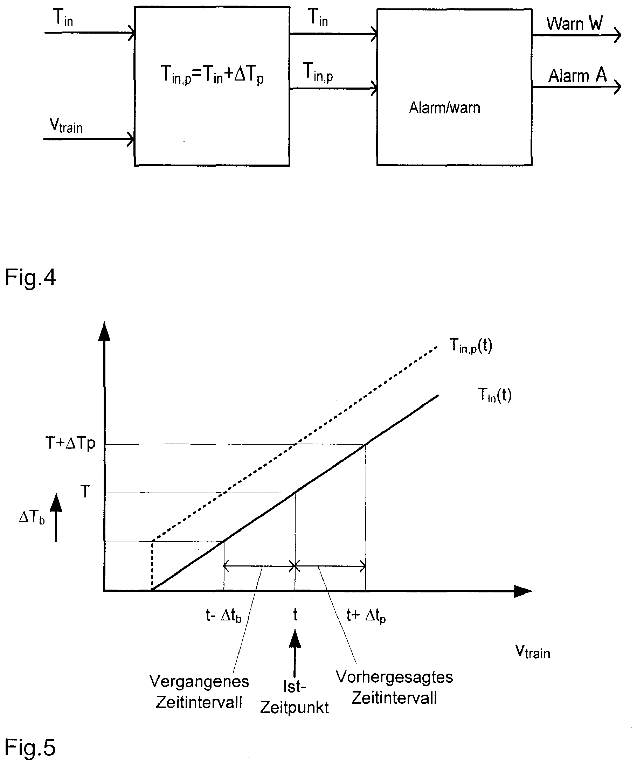

Diese Situation ist in Fig. 5 dargestellt, insbesondere der Sonderfall, dass $\Delta_{tb}$ = $\Delta_{tp}$ ist.

Wenn hingegen die Fahrzeuggeschwindigkeit $v_{train}$ während des vergangenen Zeitintervalls [t-$\Delta t_b$, t] reduziert wurde, so wird dieser Einfluss über einen Faktor c kleiner als 1 berücksichtigt, um einen demgegenüber kleineren Wert für die vorhergesagte Radsatzlagertemperatur $T_{in,p}$ (t) zu erhalten. Damit soll verhindert werden, dass ein in der Vergangenheit stattgefundener Radsatzlagertemperaturanstieg auch nach einem Bremsvorgang extrapoliert wird, weil der Wärmeeintrag in das Radsatzlager 1 durch die Bremsung reduziert wird.

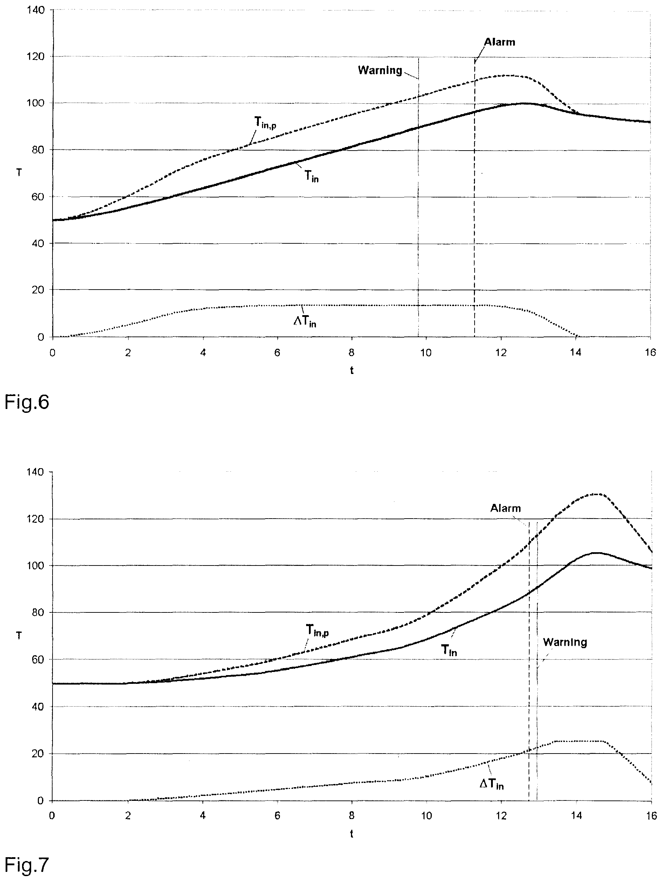

Diese Situation zeigt das Diagramm von Fig.6, welches die Abhängigkeit der gemessenen oder geschätzten Radsatzlagertemperaturen $T_{in}$ (durchgezogene Linie) und der Radsatzlagertemperatur $T_{in,p}$ (gestrichelte Linie) von der Fahrzeuggeschwindigkeit $v_{train}$ veranschaulicht. Dort fand in dem vergangenen Zeitintervall [t- $\Delta t_b$, t] eine Reduzierung der Fahrgeschwindigkeit $v_{train}$ statt, so dass dort der Temperaturgradient $\Delta T_b$ relativ klein ist.

Wurde jedoch gemäß Fall c) die Fahrzeuggeschwindigkeit $v_{train}$ innerhalb des vergangenen Zeitintervalls [t- $\Delta t_b$, t] erhöht, ist damit zu rechnen, dass sich der Wärmeeintrag in das Radsatzlager 1 weiter erhöht, so dass ein Faktor c größer als 1 angesetzt wird, um diesem Einfluss Rechnung zu tragen.

Diese Situation zeigt das Diagramm von Fig.7, welches die Abhängigkeit der gemessenen oder geschätzten Radsatzlagertemperaturen $T_{in}$ (durchgezogene Linie) und der Radsatzlagertemperatur $T_{in,p}$ (gestrichelte Linie) von der Fahrzeuggeschwindigkeit $v_{train}$ veranschaulicht. Dort fand in dem vergangenen Zeitintervall [t- $\Delta t_b$, t] eine Erhöhung der Fahrgeschwindigkeit $v_{train}$ statt, so dass dort der Temperaturgradient $\Delta T_b$ relativ groß ist.

Besonders bevorzugt ist weiterhin vorgesehen, dass

- falls die zum gegenwärtigen Zeitpunkt herrschende Temperatur $T_{in}$ oder die vorhergesagte Temperatur $T_{in,p}$ des Radsatzlagers 1 eine vorgegebene Temperaturschwelle $T_w$ für wenigstens ein vorgegebenes Zeitintervall $\Delta t_w$, überschreitet, ein Warnsignal W erzeugt wird,

- falls die vorhergesagte Temperatur $T_{in,p}$ des Radsatzlagers 1 eine vorgegebene Temperaturschwelle $T_A$ für wenigstens ein vorgegebenes Zeitintervall $\Delta t_A$ überschreitet, ein Alarmsignal A erzeugt wird.

Ein Warnsignal W stellt dabei hinsichtlich der Dringlichkeit eines Eingriffs wie beispielsweise einer automatischen Bremsung des Schienenfahrzeugs oder Schienenfahrzeugzuges ein nachrangiges Signal gegenüber dem vorrangigen Alarmsignal A dar, welches ein solches sofortiges Eingreifen hervorruft.

Wenn bezogen auf Fig.6 und Fig.7 beispielsweise die kritische Temperatur des Radsatzlagers 1 120°C beträgt, so würde der Schwellwert $T_A$ zur Erzeugung des Alarmsignals A beim Stand der Technik (Alarm konventionell) beispielsweise auf 100°C festgelegt werden, um einen ausreichenden Sicherheitsabstand zur Verfügung zu haben. Der Schwellwert $T_w$ zur Erzeugung eines Warnsignals W beträgt beispielsweise 90°C.

Hingegen kann der Schwellwert $T_A$ zur Erzeugung des Alarmsignals A für das erfindungsgemäße Verfahren zur Vorhersage der Radsatzlagertemperatur $T_{in,p}$ näher an der kritischen Temperatur (120°C) liegen und beträgt beispielsweise 110°C.

Bei dem Beispiel von Fig.7 beträgt die gemessene oder geschätzte Temperatur $T_{in}$ bei Auslösen eines Alarmsignals A beispielsweise 85°C, d.h. obwohl der Schwellwert $T_A$ zur Alarmsignalerzeugung 10°C höher als beim Stand der Technik liegt, erfolgt die Auslösung des Alarmsignals A bereits bei einer Temperatur, die 15°C niedriger ist. Somit kann bei geeigneter Reaktion auf das Alarmsignal A verhindert werden, dass die kritische Temperatur (120°C) des Radsatzlagers 1 überhaupt erreicht wird.

Bei einem festgestellten großen Temperaturgradienten $\Delta T_b$ der Temperatur des Radsatzlagers 1 innerhalb des vergangenen Zeitintervalls [t- $\Delta t_b$, t], wie es in Fig.7 der Fall ist, wird ein Warnsignal W hinfällig bzw. würde zeitlich erst nach dem Alarmsignal A erzeugt werden, da dann sehr schnell ein für das betreffende Radsatzlager 1 kritischer Zustand erreicht wird, so dass in diesem Fall ein einen Eingriff hervorrufendes Alarmsignal A einem Warnsignal W vorzuziehen ist.

Bei moderaten Temperaturgradienten $\Delta T_b$ der Temperatur des Radsatzlagers 1 innerhalb des vergangenen Zeitintervalls [t- $\Delta t_b$, t], wie es in Fig.6 der Fall ist, geht einem unter Umständen noch zu erzeugenden Alarmsignal A jedoch ein Warnsignal W voraus, auf welches geeignet reagiert werden kann, beispielsweise durch eine Reduzierung der Fahrzeuggeschwindigkeit $V_{train}$.

Die durch das erfindungsgemäße Verfahren vorhergesagte Temperatur $T_{in,p}$ des Radsatzlagers 1 wird bevorzugt auch zum Vergleich mit einem Temperaturgrenzwert herangezogen, um beurteilen zu können, ob eine dem Radsatzlager 1 zugeordnete oder benachbarte (hier nicht gezeigte) Bremseinrichtung, insbesondere Scheibenbremse sich in einem gelösten oder zugespannten Zustand befindet.

Dann liefert eine den Temperaturgrenzwert überschreitende vorhergesagte Temperatur $T_{in,p}$ des Radsatzlagers 1 ein Signal für einen zugespannten Zustand der dem Radsatzlager 1 zugeordneten oder benachbarten Reibungsbremse und eine den Temperaturgrenzwert unterschreitende abgeschätzte vorhergesagte Temperatur $T_{in,p}$ des Radsatzlagers 1 ein Signal für einen gelösten Zustand der dem Radsatzlager 1 zugeordneten oder benachbarten Reibungsbremse.

Dem liegt die Erfahrung zugrunde, dass beim Zuspannen einer Reibungsbremse Reibungswärme entsteht. Diese Reibungswärme wird dann durch Wärmeübergang, Wärmeleitung entlang der Achse 2 und/oder Konvektion auf das benachbarte Radsatzlager 1 übertragen.

Eine relativ niedrige vorhergesagte Temperatur $T_{in,p}$ des Radsatzlagers 1 deutet dann nicht nur auf einen normalen Lauf des Radsatzlagers 1 hin, sondern auch auf einen gelösten Zustand der benachbarten Reibungsbremse. Demgegenüber liefert eine relativ hohe die vorhergesagte Temperatur $T_{in,p}$ des Radsatzlagers 1 einen Hinweis auf ein heiß gelaufenes Radsatzlager 1 und/oder auf einen zugespannten Zustand der in Bezug zu dem betreffenden Radsatzlager 1 benachbarten Reibungsbremse.

Bezugszeichenliste

1    Radsatzlager
2    Achse
4    Radsatzlagergehäuse
6    Radsatzlagerdeckel
8    Polrad
10   Temperatursensor

**Patentansprüche**

1. Verfahren zur Vorhersage der Temperatur ($T_{in,p}$) eines Radlagers (1) eines Rades eines Fahrzeugs für einen in Bezug zu einem gegenwärtigen Zeitpunkt (t) in der Zukunft liegenden Zeitpunkt (t+$\Delta t_p$) oder für ein in Bezug zu einem gegenwärtigen Zeitpunkt (t) in der Zukunft liegendes Zeitintervall (t, t+$\Delta t_p$) auf der Basis eines in Bezug zum gegenwärtigen Zeitpunkt (t) in einem vergangenen Zeitintervall (t-$\Delta t_b$, t) liegenden Verlaufs der Temperatur ($T_{in}$) des Radlagers (1), wobei die vorhergesagte Temperatur ($T_{in,p}$) des Radlagers (1) aus der Summe der zum gegenwärtigen Zeitpunkt (t) herrschenden Temperatur ($T_{in}$) des Radlagers (1) und eines Korrekturwerts ($\Delta T_p$) ermittelt wird, welcher abhängig von einer Änderung der Fahrgeschwindigkeit ($\Delta v_{train}$) und von einer Änderung der Temperatur ($\Delta t_b$) des Radlagers (1) innerhalb des vergangenen Zeitintervalls (t-$\Delta t_b$, t) bestimmt wird:

$$T_{in,p} = T_{in} + \Delta T_p$$

wobei der Korrekturwert ($\Delta t_p$) aus dem Produkt eines die Änderung der Fahrgeschwindigkeit ($\Delta v_{train}$) innerhalb des vergangenen Zeitintervalls (t-$\Delta t_b$, t) repräsentierenden Faktors (c) und der Änderung der Temperatur ($\Delta t_b$) des Radlagers (1) innerhalb des vergangenen Zeitintervalls (t-$\Delta t_b$, t) berechnet wird:

$$\Delta T_p = c \cdot \Delta T_b$$

und wobei der Faktor (c) gleich dem Verhältnis der Fahrgeschwindigkeit [$v_{train}(t)$] zum gegenwärtigen Zeitpunkt (t) und der Fahrgeschwindigkeit [$v_{train}(t-\Delta t_b)$] an der unteren Intervallgrenze (t-$\Delta t_b$) des vergangenen Zeitintervalls [t-$\Delta t_b$, t] ist:

$$c = v_{train}(t)/v_{train}(t-\Delta t_b),$$

und dieser Faktor (c)

a) gleich 1 ist, falls die Änderung der Fahrgeschwindigkeit ($\Delta v_{train}$) innerhalb des vergangenen Zeitintervalls (t-$\Delta t_b$, t) gleich Null ist,
b) kleiner als 1 ist, falls die Änderung der Fahrgeschwindigkeit ($Av_{train}$) innerhalb des vergangenen Zeitintervalls (t-$\Delta t_b$, t) positiv ist,
c) größer 1 ist, falls die Änderung der Fahrgeschwindigkeit ($Av_{train}$) innerhalb des vergangenen Zeitintervalls (t-$\Delta t_b$, t) negativ ist.

2. Verfahren nach Anspruch 1, **dadurch gekennzeichnet, dass** der Faktor (c) auf einen vorgegebenen Wert innerhalb eines vorgegebenes Intervall

($c_{min}$, $c_{max}$) begrenzt wird.

3. Verfahren nach einem der vorhergehenden Ansprüche, **dadurch gekennzeichnet, dass**

   a) falls die zum gegenwärtigen Zeitpunkt (t) herrschende Temperatur ($T_{in}$) oder die vorhergesagte Temperatur ($T_{in,p}$) des Radlagers (1) eine vorgegebene Temperaturschwelle ($T_w$) für wenigstens ein vorgegebenes Zeitintervall ($\Delta t_w$) überschreitet, ein Warnsignal (W) erzeugt wird,
   b) falls die vorhergesagte Temperatur ($T_{in,p}$) des Radlagers (1) eine vorgegebene Temperaturschwelle ($T_A$) für wenigstens ein vorgegebenes Zeitintervall ($\Delta t_A$) überschreitet, ein Alarmsignal (A) erzeugt wird.

4. Verfahren nach einem der vorhergehenden Ansprüche, **dadurch gekennzeichnet, dass** die Temperatur ($T_{in}$) des Radlagers (1) zum gegenwärtigen Zeitpunkt (t) und die Temperatur ($T_{in}$) des Radlagers (1) innerhalb des vergangenen Zeitintervalls ($t-\Delta t_b$, t) gemessen oder geschätzt wird.

5. Verfahren nach Anspruch 4, **dadurch gekennzeichnet, dass** die Temperatur ($T_{in}$) des Radlagers (1) zum gegenwärtigen Zeitpunkt (t) auf der Basis der an einem vom Radlager (1) verschiedenen, aber mit dem Radlager (1) in direkter oder indirekter Weise in wärmeleitender Verbindung stehenden Bauteil (6) gemessenen Temperatur bestimmt wird.

6. Verfahren nach Anspruch 5, **dadurch gekennzeichnet, dass** als das vom Radsatzlager (1) verschiedene Bauteil (6) ein das Radlager (1) wenigstens teilweise abdeckender Radsatzlagerdeckel (6) oder ein Radsatzlagergehäuse (4) herangezogen wird.

7. Verfahren nach einem der vorhergehenden Ansprüche, **dadurch gekennzeichnet, dass** der Korrekturwert ($\Delta t_p$) auf einen Maximalwert ($\Delta T_{p,max}$) begrenzt wird.

8. Vorrichtung zur Ausführung des Verfahrens nach einem der vorher gehenden Ansprüche, ein **dadurch gekennzeichnet, dass** ein Temperatursensor (10) zur direkten oder indirekten Messung der Temperatur des Radlagers (1) sowie ein Mikrocomputer vorgesehen sind, in welchem ein Rechenmodell zur Vorhersage der Temperatur ($T_{in,p}$) des Radlagers (1) implementiert ist.

9. Vorrichtung nach Anspruch 8, **dadurch gekennzeichnet, dass** das Fahrzeug ein Schienenfahrzeug und das Radlager (1) ein Radsatzlager eines Radsatzes des Schienenfahrzeugs ist.

10. Vorrichtung nach Anspruch 8 oder 9, **dadurch gekennzeichnet, dass** der Temperatursensor (10) mit einem Geschwindigkeitssensor zu einem Kombinationssensor zusammengefasst ist.

11. Verwendung der anhand des Verfahrens nach einem der Ansprüche 1 bis 7 vorhergesagten Temperatur ($T_{in,p}$) des Radlagers (1) zum Vergleich mit einem Temperaturgrenzwert, **dadurch gekennzeichnet, dass** eine den Temperaturgrenzwert überschreitende vorhergesagte Temperatur ($T_{in,p}$) des Radlagers (1) ein Signal für einen zugespannten Zustand wenigstens einer dem Radlager (1) zugeordneten oder benachbarten Reibungsbremse und eine den Temperaturgrenzwert unterschreitende vorhergesagte Temperatur ($T_{in,p}$) des Radlagers (1) ein Signal für einen gelösten Zustand der dem Radlager (1) zugeordneten oder benachbarten Reibungsbremse liefert.

**Claims**

1. Method for predicting the temperature ($T_{in,p}$) of a wheel bearing (1) of a wheel of a vehicle for a future time ($t+\Delta t_p$) in relation to a present time (t) or for a future time interval (t, $t+\Delta t_p$) in relation to a present time (t) on the basis of a profile of the temperature ($T_{in}$) of the wheel bearing (1) in a past time interval ($t-\Delta t_b$, t) in relation to the present time (t), wherein the predicted temperature ($T_{in,p}$) of the wheel bearing (1) is obtained from the sum of the temperature ($T_{in}$) of the wheel bearing (1) at the present time (t) and a correction value ($\Delta T_p$) which is determined as a function of a change in the velocity ($\Delta v_{train}$) and of a change in the temperature ($\Delta T_b$) of the wheel bearing (1) within the past time interval ($t-\Delta t_b$, t):

$$T_{in,p} = T_{in} + \Delta T_p,$$

wherein the correction value ($\Delta T_p$) is calculated from the product of a factor (c) which represents the change in the velocity ($\Delta v_{train}$) within the past time interval ($t-\Delta t_b$, t) and the change in the temperature ($\Delta T_b$) of the wheel bearing (1) within the past time interval ($t-\Delta t_b$, t):

$$\Delta T_p = c \, \Delta T_b,$$

and wherein the factor (c) is equal to the relationship between the velocity [$v_{train}(t)$] at the present time (t) and the velocity [$v_{train}(t-\Delta t_b)$] at the lower interval limit ($t-\Delta t_b$) of the past time interval ($t-\Delta t_b$, t):

$$c = v_{train}(t)/v_{train}(t-\Delta t_b),$$

and this factor (c)

　　a) equals 1 if the change in the velocity ($\Delta v_{train}$) within the past time interval (t-$\Delta t_b$, t) is zero

　　b) is less than 1 if the change in the velocity ($\Delta v_{train}$) within the past time interval (t-$\Delta t_b$, t) is positive,

　　c) is more than 1 if the change in the velocity ($\Delta v_{train}$) within the past time interval (t-$\Delta t_b$, t) is negative.

2. Method according to claim 1, **characterised in that** the factor (c) is limited to a predefined value within a predefined interval ($c_{min}$, $c_{max}$).

3. Method according to any of the preceding claims, **characterised in that,**

　　a) if the temperature ($T_{in}$) at the present time (t) or the predicted temperature ($T_{in,p}$) of the wheel bearing (1) exceeds a predefined temperature threshold ($T_w$) for at least one predefined time interval ($\Delta t_w$), a warning signal (W) is generated,

　　b) if the predicted temperature ($T_{in,p}$) of the wheel bearing (1) exceeds a predefined temperature threshold ($T_A$) for at least one predefined time interval ($\Delta t_A$), an alarm signal (A) is generated.

4. Method according to any of the preceding claims, **characterised in that** the temperature ($T_{in}$) of the wheel bearing (1) is measured or estimated at the present time (t), and the temperature ($T_{in}$) of the wheel bearing (1) is measured or estimated within the past time interval (t-$\Delta t_b$, t).

5. Method according to any of the preceding claims, **characterised in that** the temperature ($T_{in}$) of the wheel bearing (1) is determined on the basis of the temperature measured at a component (6) which is different from the wheel bearing (1) but has a thermally conductive direct or indirect connection to the wheel bearing (1).

6. Method according to claim 6, **characterised in that** a wheel set bearing cover (6) which at least partially covers the wheel bearing (1) or a wheel set bearing housing (4) is used as the component (6) which is different from the wheel set bearing (1).

7. Method according to any of the preceding claims, **characterised in that** the correction value ($\Delta T_p$) is limited to a maximum value ($\Delta T_{p,\,max}$).

8. Device for carrying out the method according to any of the preceding claims.
　　**characterised in that** a temperature sensor (10) for directly or indirectly measuring the temperature of the wheel bearing (1) and a microcomputer, in which a computing model for predicting the temperature ($T_{in,p}$) of the wheel bearing (1) is implemented, are provided.

9. Device according to claim 8, **characterised in that** the vehicle is a rail vehicle and the wheel bearing (1) is a wheel set bearing of a wheel set of the rail vehicle.

10. Device according to claim 8 or 9, **characterised in that** the temperature sensor (10) is combined with a speed sensor to form a combination sensor.

11. Use of the temperature ($T_{in,p}$) of the wheel bearing (1) predicted on the basis of the method according to any of claims 1 to 8 for comparison with a temperature limiting value, **characterised in that** a predicted temperature ($T_{in,p}$) of the wheel bearing (1) which exceeds the temperature limiting value supplies a signal for an applied state of at least one friction brake which is assigned to or adjacent to the wheel bearing (1) and a predicted temperature ($T_{in,p}$) of the wheel bearing (1) which undershoots the temperature limiting value supplies a signal for a released state of the friction brake which is assigned to or adjacent to the wheel bearing (1).

**Revendications**

1. Procédé de prédiction de la température ($T_{in,p}$) d'un roulement (1) d'une roue d'un véhicule à un instant (t+$\Delta t_p$) dans l'avenir, par rapport à un instant (t) présent, ou dans un intervalle (t, t+$\Delta t_p$) de temps dans l'avenir, par rapport à un instant (t) présent, sur la base d'une courbe de la température ($T_{in}$) du roulement (1) de roue, dans un intervalle (t-$\Delta t_b$, t) de temps passé, par rapport à l'instant (t) présent, la température ($T_{in,p}$) prédite du roulement (1) de la roue étant déterminée à partir de la somme de la température ($T_{in}$) régnant à l'instant (t) présent du roulement (1) de la roue et d'une valeur ($\Delta T_p$) de correction, qui est déterminée en fonction d'une variation de la vitesse ($\Delta v_{train}$) de marche et d'une variation de la température ($\Delta T_b$) du roulement (1) de la roue dans l'intervalle (t-$\Delta t_b$, t) de temps passé :

$$T_{in,p} \;=\; T_{in} \;+\; \Delta T_P$$

la valeur ($\Delta T_p$) de correction étant calculée à partir du produit d'un facteur (c) représentant la variation de la vitesse ($\Delta v_{train}$) de marche dans l'intervalle (t-$\Delta t_b$, t) de temps passé par la variation de la température ($\Delta T_b$) du palier (1) de la roue dans l'intervalle (t-$\Delta t_b$, t) de temps passé :

$$\Delta T_p = c \Delta T_b$$

et le facteur (c) étant égal au rapport de la vitesse $[v_{train}(t)]$ de marche à l'instant (t) présent et de la vitesse $[v_{train}(t-\Delta t_b)]$ de marche à la limite $(t-\Delta t_b)$ inférieure de l'intervalle $[t-\Delta t_b, t]$ de temps passé :

$$c = v_{train}(t)/v_{train}(t-\Delta t_b),$$

et ce facteur (c)

    a) est égal à 1 si la variation de la vitesse $(\Delta v_{train})$ de marche, dans l'intervalle $(t-\Delta t_b, t)$ de temps passé, est égale à zéro,
    b) est plus petit que 1 si la variation de la vitesse $(\Delta v_{train})$ de marche, dans l'intervalle $(t-\Delta t_b, t)$ de temps passé, est positive,
    c) est plus grand que 1 si la variation de la vitesse $(\Delta v_{train})$ de marche, dans l'intervalle $(t-\Delta t_b, t)$ de temps passé, est négative.

**2.** Procédé suivant la revendication 1, **caractérisé en ce que** l'on limite le facteur (c) à une valeur donnée à l'avance dans un intervalle $(c_{min}, c_{max})$ donné à l'avance.

**3.** Procédé suivant l'une des revendications précédentes, **caractérisé en ce que**

    a) si la température $(T_{in})$ régnant à l'instant (t) présent ou la température $(T_{in,p})$ prédite du roulement (1) de la roue dépasse un seuil $(T_w)$ de température donné à l'avance, pendant au moins un intervalle $(\Delta t_w)$ de temps donné à l'avance, on produit un signal (W) d'avertissement,
    b) si la température $(T_{in,p})$ prédite du roulement (1) de la roue dépasse un seuil $(T_A)$ de température donné à l'avance, pendant au moins un intervalle $(\Delta t_A)$ de temps donné à l'avance, on produit un signal (A) d'alerte.

**4.** Procédé suivant l'une des revendications précédentes, **caractérisé en ce que** l'on mesure ou l'on évalue la température $(T_{in})$ du roulement (1) de la roue à l'instant (t) présent et la température $(T_{in})$ du roulement (1) de la roue dans l'intervalle $(t-\Delta t_b, t)$ de temps passé.

**5.** Procédé suivant la revendication 4, **caractérisé en ce que** l'on détermine la température $(T_{in})$ du roulement (1) de la roue à l'instant (t) présent sur la base de la température mesurée sur une pièce (6) différente du roulement (1) de la roue, mais en liaison de conduction de la chaleur, d'une façon directe ou indirecte, avec le roulement (1) de la roue.

**6.** Procédé suivant la revendication 5, **caractérisé en ce que** l'on tire parti d'un couvercle (6) de boîte d'essieu ou d'une enveloppe (4) de boîte d'essieu recouvrant, au moins en partie, le roulement (1) de la roue, comme pièce (6) différente du roulement (1) de la roue.

**7.** Procédé suivant l'une des revendications précédentes, **caractérisé en ce que** l'on limite la valeur $(\Delta T_p)$ de correction à une valeur $(\Delta T_{p, max})$ maximum.

**8.** Système pour effectuer le procédé suivant l'une des revendications précédentes, **caractérisé en ce qu'**il est prévu une sonde (10) de température pour la mesure directe ou indirecte de la température du roulement (1) de la roue, ainsi qu'un micro-ordinateur dans lequel est mis en oeuvre un modèle de calcul pour prédire la température $(T_{in,p})$ du roulement (1) de la roue.

**9.** Système suivant la revendication 8, **caractérisé en ce que** le véhicule est un véhicule ferroviaire et le roulement (1) de la roue est une boîte d'un essieu du véhicule ferroviaire.

**10.** Système suivant la revendication 8 ou 9, **caractérisé en ce que** la sonde (10) de température est rassemblée avec un capteur de vitesse en un capteur combiné.

**11.** Utilisation de la température $(T_{in,p})$ du roulement (1) de la roue prévue à l'aide du procédé suivant l'une des revendications 1 à 7 pour la comparer à une valeur limite de température, **caractérisée en ce qu'**une température $(T_{in,p})$, prédite et dépassant une valeur limite de température du roulement (1) de roue, fournit un signal pour un état serré d'au moins un frein à friction associé au roulement (1) de la roue ou en étant voisin, et une température $(T_{in,p})$ prédite, inférieure à la valeur limite de température du roulement (1) de la roue, fournit un signal pour un état desserré du frein à friction associé au roulement (1) de la roue ou en étant voisin.

Fig.1

Fig.2

Fig.3

$T_{in}$ → | $T_{in,p}=T_{in}+\Delta T_p$ | → $T_{in}$, $T_{in,p}$ → | Alarm/warn | → Warn W, → Alarm A

$V_{train}$ →

Fig.4

$T_{in,p}(t)$

$T_{in}(t)$

$T+\Delta Tp$

$T$

$\Delta T_b$ ↑

$t-\Delta t_b$        $t$        $t+\Delta t_p$

$V_{train}$

Vergangenes Zeitintervall      Ist-Zeitpunkt      Vorhergesagtes Zeitintervall

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1365163 A1